# EUROPEAN PATENT APPLICATION

(11) **EP 3 249 886 A1**
(43) Date of publication of application: **29.11.2017**
(21) Application number: 17151082.9
(22) Date of filing: 11.01.2017
(51) Int. Cl.: H04L 29/08, H04W 12/06, H04W 48/20

(54) **NETWORK SYSTEM CAPABLE OF SWIFTLY ESTABLISHING WPS CONNECTION AND WPS CONNECTION METHOD THEREOF**

(30) Priority: 27.05.2016 TW 105116671
(71) Applicant: Arcadyan Technology Corporation, Hsinchu City 300 (TW)
(72) Inventor: LIU, FA-CHIANG, 300 Hsinchu City (TW); LEE, CHIH-FANG, 300 Hsinchu City (TW)
(74) Representative: Lermer, Christoph

(57) **Abstract**

A network system, which may include a target device, a plurality of network devices and a control device. The network devices may be connected to a network. The control device may be able to wirelessly communicate with the network devices via Wi-Fi. The control device may select one of the network devices as a designated device, and may control the designated device to execute the WPS connection process within a default time period before or after the target device executes the WPS connection process so as to establish the WPS connection between the target device and the designated device, whereby the target device may wirelessly communicate with the designated device via Wi-Fi.

## Description

### CROSS REFERENCE TO RELATED APPLICATION

This application also claims priority to Taiwan Patent Application No. 105116671 filed in the Taiwan Patent Office on May 27, 2016, the entire content of which is incorporated herein by reference.

### TECHNICAL FIELD

The present invention relates to a network system, in particular to a network system capable of swiftly establishing the WPS connection. The present invention further relates to the WPS connection method of the network system.

### BACKGROUND

Wireless Fidelity (Wi-Fi) technology is a very popular wireless communication technology all these years, which is generally applied to computers, hand-held electronic devices and networks of local network systems. It is necessary to establish the Wi-Fi protected setup (WPS) connection between two devices before the devices communicates with each other via Wi-Fi; briefly speaking, the primary object of the WPS is to simplify the wireless security settings of network devices. A network system may include a plurality of network devices, such as access points (AP), repeaters and computers; when a user wants to add a network device to the network system, the user should select one of the original network devices as the designated device, and operate the network device to be added and the designated device to enter the WPS mode, and then press the WPS buttons of the network device to be added and the designated device so as to establish the WPS connection between the network device to be added and the designated device; in this way, the two devices can communicate with each other via Wi-Fi. The above conventional WPS connection method can simplify the security settings; however, the conventional WPS connection method still has a lot of shortcomings to be overcome.

For example, when a user wants to add a new network device to a network system, the user should move the network device to be added to the installation location of a designated device of the network system, and then take the designated device out of its installation location; afterward, the user should simultaneously operate the designated device and the network device to be added to achieve the WPS connection; however, the installation location of the designated device may not be easily reached, or may be away from the desired installation location of the network device to be added; accordingly, it is very inconvenient for the user to execute the WPS connection between the designated device and the network device.

Besides, after the user has established the WPS connection between the designated device and the network device to be added, and move the added network device to the desired installation location, the user may find that the signal strength between the designated device and the network device is too low; then, the user should select another original network device as the designated device, and then repeat the above WPS connection process, which is very inefficient.

Therefore, it has become an important issue to provide a WPS connection method capable of improving the problems that the convention WPS connection method is inconvenient and of low efficiency.

### SUMMARY

To achieve the foregoing and other objects, and in accordance with the purposes of the present invention, as embodied and broadly described herein, the present invention provides a network system capable of swiftly establishing the WPS connection and the WPS connection method thereof.

In a preferred embodiment, the network system may include a target device, a plurality of network devices and a control device. The network devices may be connected to a network. The control device may be able to wirelessly communicate with the network devices via Wi-Fi. The control device may select one of the network devices as a designated device, and may control the designated device to execute the WPS connection process within a default time period before or after the target device executes the WPS connection process so as to establish the WPS connection between the target device and the designated device, whereby the target device may wirelessly communicate with the designated device via Wi-Fi.

In a preferred embodiment of the present invention, the control device may detect the network information of the network devices and select one of the network devices as the designated device according to the network information.

In a preferred embodiment of the present invention, the control device may provide a virtual input interface, and the virtual input interface may be operated to control the designated device to execute the WPS connection process.

In a preferred embodiment of the present invention, the target device and the network devices may be access points, repeaters or computers.

In a preferred embodiment of the present invention, the network information may be the signal strength or the data flow.

In a preferred embodiment of the present invention, the virtual input interface may be a virtual button.

In a preferred embodiment of the present invention, the control device may be a mobile communication device.

In a preferred embodiment of the present invention, the WPS connection method may include the following steps: providing a control device capable of wirelessly communicating with a plurality of network devices coupled to a network via Wi-Fi; selecting one of the network devices as a designated device via the control device; executing a WPS connection process by a target device; and controlling the designated device to execute the WPS connection process within a default time period before or after the target device executing the WPS connection process via the control device so as to establish a WPS connection between the target device and the designated device, whereby the target device is able to wirelessly communicate with the designated device via Wi-Fi.

In a preferred embodiment of the present invention, the WPS connection method may further include the following step: detecting the network information of the network devices, and selecting one of the network devices as the designated device according to the network information by the control device.

In a preferred embodiment of the present invention, the WPS connection method may further include the following step: providing a virtual input interface by the control device so as to control the designated device to execute the WPS connection process.

In a preferred embodiment of the present invention, the target device and the network devices may be access points, repeaters or computers.

In a preferred embodiment of the present invention, the network information may be the signal strength or the data flow.

In a preferred embodiment of the present invention, the virtual input interface may be a virtual button.

In a preferred embodiment of the present invention, the control device may be a mobile communication device.

The network system capable of swiftly establishing WPS connection and the WPS connection method thereof in accordance with the embodiments of the present invention may have the following advantages:
(1) According to one embodiment of the present invention, a user may directly use a mobile communication device as the control device to select one of the original network devices as the designated device, and can remotely control the designated device to execute the WPS connection process. Therefore, the user can directly move a target device to a proper installation location to install the target device and establish the WPS connection between the target device and the designated device without taking the designated device out of its installation location, or directly operating the designated device, which is more convenient in use.
(2) According to one embodiment of the present invention, a user may directly use a mobile communication device as the control device to detect the signal strength, data flow or other network information of all original network devices, and then select a designated device according to the above network information. Therefore, the user can swiftly establish the WPS connection between the target device and the designated device, and can make sure that the communication quality between the target device and the designated device is optimized, which is more efficient in use.

Further scope of applicability of the present application will become more apparent from the detailed description given hereinafter. However, it should be understood that the detailed description and specific examples, while indicating exemplary embodiments of the disclosure, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention and wherein:
FIG. 1 is a schematic view of a network system capable of swiftly establishing WPS connection of a first embodiment in accordance with the present invention.
FIG. 2 is a flow chart of the first embodiment in accordance with the present invention.
FIG. 3 is a schematic view of a network system capable of swiftly establishing WPS connection of a second embodiment in accordance with the present invention.
FIG. 4 is a flow chart of the second embodiment in accordance with the present invention.
FIG. 5∼FIG. 6 are a first schematic view and a second schematic view of a network system capable of swiftly establishing WPS connection of a third embodiment in accordance with the present invention.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

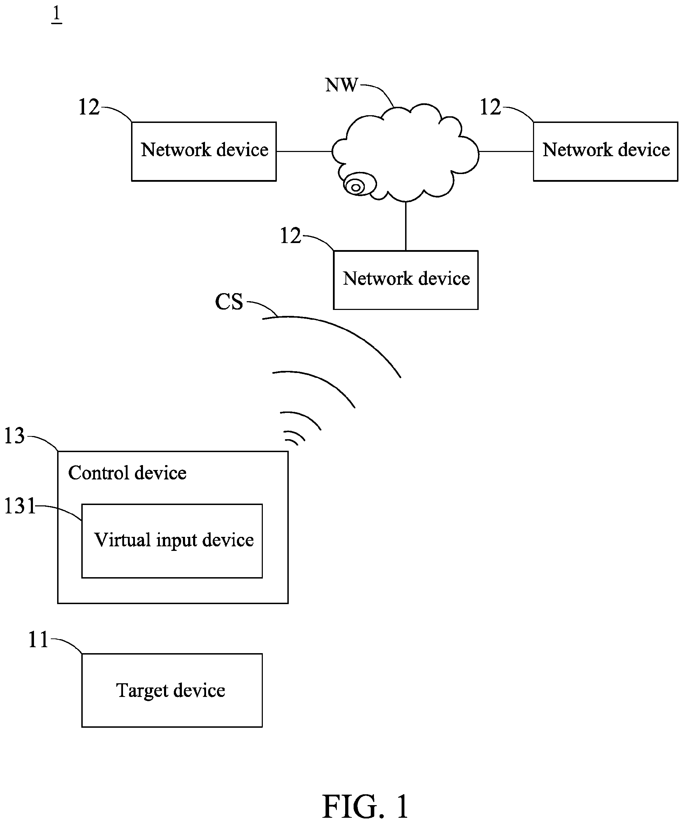

Please refer to FIG. 1, which is a schematic view of a network system capable of swiftly establishing the WPS connection of a first embodiment in accordance of the present invention. As shown in FIG. 1, the network system 1 may include a target device 11, a plurality of network devices 12 and a control device 13.

The network devices may be coupled to a network NW. The control device 13 may wirelessly communicate with the network devices 23 via Wi-Fi; preferably, the network devices 12 may be access points (AP) or repeaters, etc.

When the user wants to add the target device 11 to the network system 1, the user may move the control device 13 to the desired installation location of the target device 11. The control device 13 may provide a virtual input interface 131, so the user may select one of the network devices 12 as the designated device via the virtual input interface 131 of the control device 13, and then transmit a control signal CS to the designated device to remotely control the designated device to execute the WPS (Wi-Fi Protected Setup) connection process.

Next, the user may operate the target device 11 to execute the WPS connection process within a default time period; in this way, the WPS connection between the target device 11 and the designated device can be established, so the target device 11 can communicate with the designated device via Wi-Fi, and can have access to the network NW. Preferably, the target device 11 may be access points or repeaters, etc.; preferably, the control device 13 may be a mobile communication device, such as smart phone, tablet computer, PDA or notebook computer, etc.

As described above, when the user wants to add the target device 11 to the network system 1, the user does not have to move the target device 11 to the desired installation location of the designated device, and does not have to take the designated device out of its installation location to operate it, but can directly establish the WPS connection between the target device 11 and the designated device at the desired installation location of the target device 11, which is more convenient for the user.

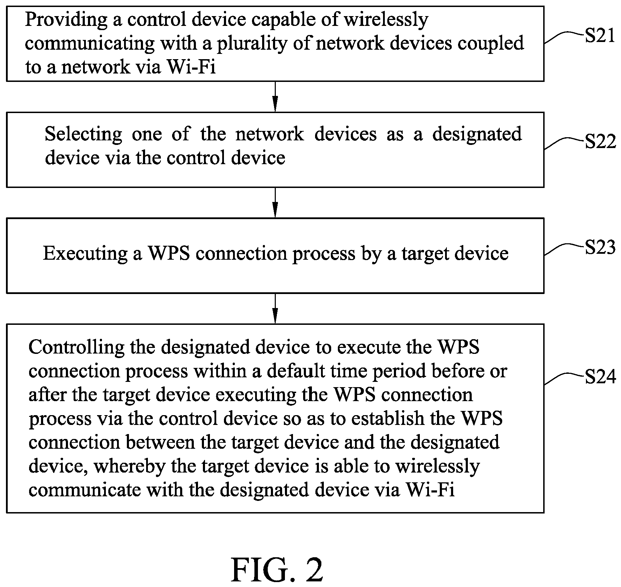

Please refer to FIG. 2, which is a flow chart of the first embodiment. The embodiment may include the following steps:
In the step S21: providing a control device capable of wirelessly communicating with a plurality of network devices coupled to a network via Wi-Fi.
In the step S22: selecting one of the network devices as a designated device via the control device.
In the step S23: executing a WPS connection process by a target device.
In the step S24: controlling the designated device to execute the WPS connection process within a default time period before or after the target device executing the WPS connection process via the control device so as to establish the WPS connection between the target device and the designated device, whereby the target device is able to wirelessly communicate with the designated device via Wi-Fi.

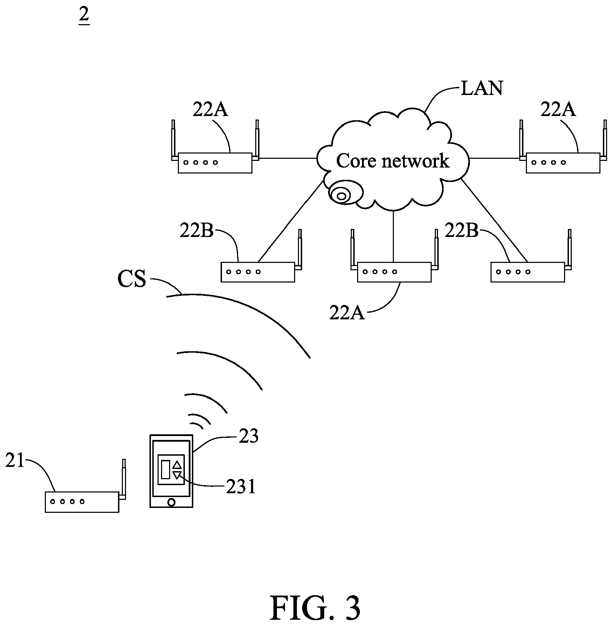

Please refer to FIG. 3, which is a schematic view of a network system capable of swiftly establishing the WPS connection of a second embodiment in accordance of the present invention. As shown in FIG. 3, the network system 2 may include a target device, a plurality of network devices and a cell phone 23. The network devices may include a plurality of access points 22A and a plurality of repeaters 22B, which may be coupled to a local area network (LAN) coupled to a core network. The cell phone 23 may wirelessly communicate with the access points 22A and the repeaters 22B via Wi-Fi. The target device may be a repeater 21, which has yet to be connected to the local area network LAN.

When the user wants to add the repeater 21 to the network system 2, the user may take the cell phone 23 to the desired installation location of the repeater 21, and may use the cell phone 23 to detect the network information of the access points 22A and the repeaters 22B. Meanwhile, the cell phone 23 may provide a virtual button 231 for the user to operate; the user may select one of the access points 22A and the repeaters 22B as a designated device via the virtual button 231 according to the network information. Then, the user may transmit a control signal CS via the cell phone 23 to the designated device to remotely control the designated device to execute the WPS (Wi-Fi Protected Setup) connection process.

Preferably, the aforementioned network information may be signal strength or data flow; in other words, the user may select one of the access points 22A and the repeaters 22B as the designated device according to their signal strength or data flow. In this way, the user can make sure that the designated device can have the highest signal strength or highest data flow so as to ensure that the communication quality between the repeater 21 and the designated device can be optimized. Therefore, the user no longer has to reselect the designated device and then repeat the WPS connection process, which is more efficient in use.

Afterward, the user may operate the repeater 21 to execute the WPS connection process within a default time period in order to establish the WPS connection between the repeater 21 and the designated device. Consequently, the repeater 21 can wirelessly communicate with the designated device via Wi-Fi so as to connect to the local area network LAN and the core network.

As described above, when the user wants to add the repeater 21 to the network system 2, the user may directly execute the WPS connection process between the repeater 21 and the designated device at the desired installation location of the repeater 21 in order to establish the WPS connection between the repeater 21 and the designated device, so the user does not have to move the repeater 21 to the desired installation location of the designated device, and does not have to take the designated device out of its installation location to operate it, which is more convenient in use. In addition, the above method can also make sure the communication quality between the repeater 21 and the designated device can be optimized, so the user does not have to reselect the designated device and then repeat the WPS connection process, which is more efficient in use.

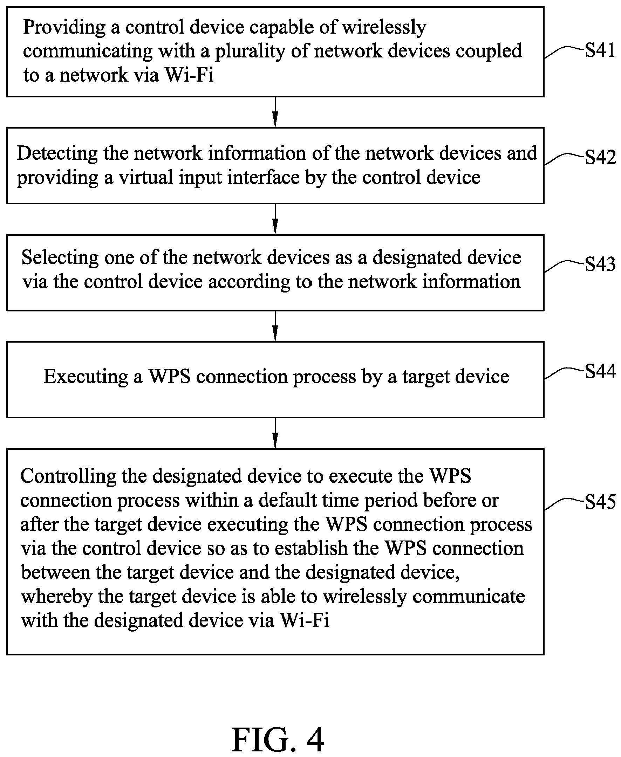

Please refer to FIG. 4, which is a flow chart of the second embodiment. The embodiment may include the following steps:
In the step S41: providing a control device capable of wirelessly communicating with a plurality of network devices coupled to a network via Wi-Fi.
In the step S42: detecting the network information of the network devices and providing a virtual input interface by the control device.
In the step S43: selecting one of the network devices as a designated device via the control device according to the network information.
In the step S44: executing a WPS connection process by a target device.

In the step S45: controlling the designated device to execute the WPS connection process within a default time period before or after the target device executing the WPS connection process via the control device so as to establish the WPS connection between the target device and the designated device, whereby the target device is able to wirelessly communicate with the designated device via Wi-Fi.

It is worthy to point out that when a user, in general, wants to add a network device to a network system, the user should move the network device to be added to the installation location of the designated device of the network system, and the take the designated device out of its installation location, which is very inconvenient for the user. On the contrary, according to one embodiment of the present invention, a user may directly use a mobile communication device as the control device to select one of the original network devices as the designated device, and can remotely control the designated device to execute the WPS connection process; therefore, the user can directly move a target device to a proper installation location to install the target device and establish the WPS connection between the target device and the designated device without taking the designated device out of its installation location, or directly operating the designated device, which is more convenient for the user.

Besides, after the user has established the WPS connection between the designated device and the network device to be added, and move the added network device to the desired installation location, the user may find that the signal strength between the designated device and the network device is too low; then, the user should select another original network device as the designated device, and then repeat the above WPS connection process, which is very inefficient. On the contrary, according to one embodiment of the present invention, a user may directly use a mobile communication device as the control device to detect the signal strength, data flow or other network information of all original network devices, and then select a designated device according to the above network information. Therefore, the user can swiftly establish the WPS connection between the target device and the designated device, and can make sure that the communication quality between the target device and the designated device is optimized, which is more efficient in use.

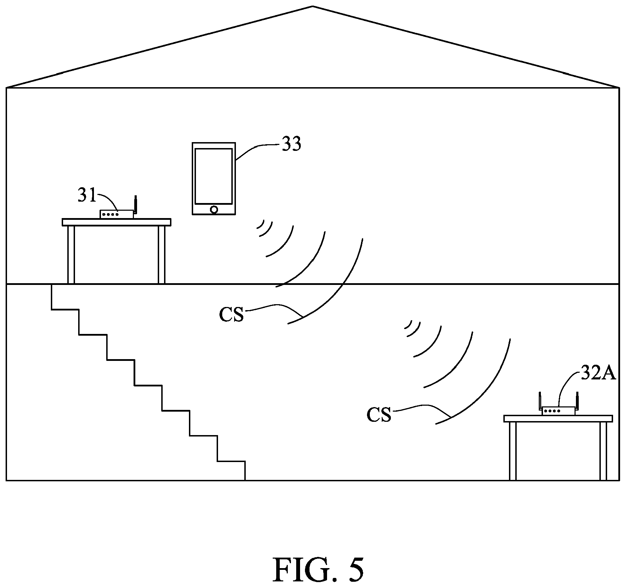

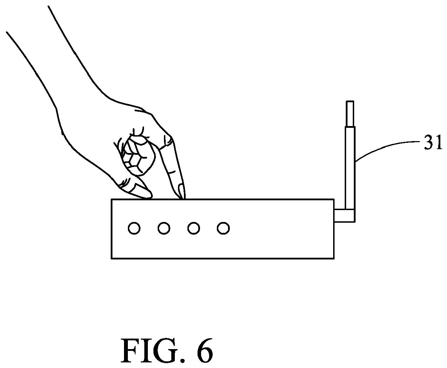

Please refer to FIG. 5 and FIG. 6, which are a first schematic view and a second schematic view of a network system capable of swiftly establishing WPS connection of a third embodiment in accordance with the present invention. The embodiment illustrates a preferred usage situation of the network system capable of swiftly establishing WPS connection.

As shown in FIG. 5, a user moves the repeater 31 to the desired installation location, and then uses the cell phone 33 to detect the signal strength of all access points, repeaters and computers in a local area network. Then, the user selects the access point 32A with the highest signal strength as the designated device. Afterward, the user transmits a control signal CS via the cell phone 33 to the designated device in order to remotely control the designated device to execute the WPS connection process.

As shown in FIG. 6, the user presses the WPS button of the repeater 31 within a default time period to control the repeater 31 to execute the WPS connection process. Finally, the WPS connection between the repeater 31 and the access point 32A is successfully established, so the repeater 31 can have access to the local area network.

In summation of the description above, according to one embodiment of the present invention, a user may directly use a mobile communication device as the control device to select one of the original network devices as the designated device, and can remotely control the designated device to execute the WPS connection process. Therefore, the user can directly move a target device to a proper installation location to install the target device and establish the WPS connection between the target device and the designated device without taking the designated device out of its installation location, or directly operating the designated device, which is more convenient in use.

Besides, according to one embodiment of the present invention, a user may directly use a mobile communication device as the control device to detect the signal strength, data flow or other network information of all original network devices, and then select a designated device according to the above network information. Therefore, the user can swiftly establish the WPS connection between the target device and the designated device, and can make sure that the communication quality between the target device and the designated device is optimized, which is more efficient in use.

It will be apparent to those skilled in the art that various modifications and variations can be made to the disclosed embodiments. It is intended that the specification and examples be considered as exemplary only, with a true scope of the invention being indicated by the following claims and their equivalents.

## Claims

1. A network system capable of swiftly establishing WPS connection, comprising:
a target device;
a plurality of network devices, coupled to a network; and
a control device, capable of wirelessly communicating with the network devices via Wi-Fi;
wherein the control device selects one of the network devices as a designated device, and controls the designated device to execute a WPS connection process within a default time period before or after the target device executes the WPS connection process so as to establish a WPS connection between the target device and the designated device, whereby the target device is able to wirelessly communicate with the designated device via Wi-Fi.

2. The network system of claim 1, wherein the control device detects a network information of the network devices and select one of the network devices as the designated device according to the network information.

3. The network system of claim 1, wherein the control device provides a virtual input interface, and the virtual input interface is operated to control the designated device to execute the WPS connection process.

4. The network system of claim 1, wherein the target device and the network devices are access points, repeaters or computers.

5. The network system of claim 2, wherein the network information is a signal strength or a data flow.

6. The network system of claim 3, wherein the virtual input interface is a virtual button.

7. The network system of claim 4, wherein the control device is a mobile communication device.

8. A WPS connection method, comprising the following steps:
providing a control device capable of wirelessly communicating with a plurality of network devices coupled to a network via Wi-Fi;
selecting one of the network devices as a designated device via the control device;
executing a WPS connection process by a target device; and
controlling the designated device to execute the WPS connection process within a default time period before or after the target device executing the WPS connection process via the control device so as to establish a WPS connection between the target device and the designated device, whereby the target device being able to wirelessly communicate with the designated device via Wi-Fi.

9. The WPS connection method of claim 8, further comprising the following step:
detecting a network information of the network devices, and selecting one of the network devices as the designated device according to the network information by the control device.

10. The WPS connection method of claim 8, further comprising the following step:
providing a virtual input interface by the control device so as to control the designated device to execute the WPS connection process.

11. The WPS connection method of claim 8, wherein the target device and the network devices are access points, repeaters or computers.

12. The WPS connection method of claim 9, wherein the network information is a signal strength or a data flow.

13. The WPS connection method of claim 10, wherein the virtual input interface is a virtual button.

14. The WPS connection method of claim 11, wherein the control device is a mobile communication device.
